(19) Europäisches Patentamt

European Patent Office

Office européen des brevets

(11) EP 2 990 447 A1

(12) EUROPEAN PATENT APPLICATION

(43) Date of publication:
02.03.2016 Bulletin 2016/09

(51) Int Cl.:
C09D 11/106 (2014.01)  C09D 11/322 (2014.01)

(21) Application number: 15182926.4

(22) Date of filing: 28.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 28.08.2014 JP 2014174490

(71) Applicant: Seiko Epson Corporation
Shinjuku-ku
Tokyo (JP)

(72) Inventors:
• SANO, Tsuyoshi
Suwa-shi, Nagano 392-8502 (JP)
• OKUYAMA, Tomoyuki
Suwa-shi, Nagano 392-8502 (JP)
• MIZUTAKI, Yusuke
Suwa-shi, Nagano 392-8502 (JP)
• KUMAGAI, Shiki
Suwa-shi, Nagano 392-8502 (JP)

(74) Representative: Miller Sturt Kenyon
9 John Street
London WC1N 2ES (GB)

(54) INK COMPOSITION AND INK SET

(57) There is provided an ink composition including: a pigment; a polymer dispersant; water; and a water-soluble organic solvent, in which the pigment includes Pigment Yellow 74, and the integrated value of absorbance of light having a wavelength of 300 nm to 400 nm is 30% or less with respect to 100% of the integrated value of absorbance of light having a wavelength of 300 nm to 600 nm.

FIGURE

**Description**

BACKGROUND

1. Technical Field

The present invention relates to an ink composition and an ink set.

2. Related Art

Ink jet recording methods have been rapidly developed in many areas because high-definition images can be recorded by a comparatively simple device. Among these, various studies have been made about the color developing properties and light resistance of the obtained image. For example, JP-A-2012-72359, for the purpose of providing an ink which can make the color developing properties and light resistance of an image excellent and can obtain an image having a high-level of glossiness, discloses an ink, including a plurality of pigments, a plurality of water-soluble resins, a surfactant, and a water-soluble organic solvent, in which the surfactant is a polyoxyethylene alkyl ether having a HLB value of 13.0 or more, measured by Griffin's method, the plurality of pigments include C.I. Pigment Yellow 74 and C.I. Pigment Yellow 128, the plurality of water-soluble resins include acrylic resin and urethane resin, and the water-soluble organic solvent includes a predetermined compound.

However, when the ink is used in combination with pigments as disclosed in JP-A-2012-72359, there is a problem in that the color balance of an image is apt to collapse in the time-dependent change because the degree of color fading of each of the pigments is different.

SUMMARY

The purpose of this invention is to solve at least a part of the above-mentioned problem. An advantage of some aspects of the invention is to provide an ink composition which can obtain an image having excellent color developing properties and light resistance and which has excellent storage stability, and an ink set using the ink composition.

The present inventors have made efforts to solve the above-mentioned problems. As a result, the present inventors have found that these problems can be solved if an ink composition having a predetermined configuration is used. Based on this finding, the invention has been completed.

That is, the invention is as follows.

[1] An ink composition including: a pigment; a polymer dispersant; water; and a water-soluble organic solvent, in which the pigment includes Pigment Yellow 74, and the integrated value of absorbance of light having a wavelength of 300 nm to 400 nm is 30% or less with respect to 100% of the integrated value of absorbance of light having a wavelength of 300 nm to 600 nm.

[2] The ink composition according to [1], in which the integrated value of absorbance of light having a wavelength of 500 nm to 600 nm is 5.0% or less with respect to 100% of the integrated value of absorbance of light having a wavelength of 300 nm to 600 nm.

[3] The ink composition according to [1] or [2], in which the maximum absorption wavelength of the ink composition is 430 nm to 450 nm.

[4] The ink composition according to any one of [1] to [3], in which the polymer dispersant is a polymer having a structural unit derived from a cycloalkyl group-containing (meth)acrylate.

[5] The ink composition according to any one of [1] to [4], in which the water-soluble organic solvent contains 1,2-hexanediol.

[6] The ink composition according to any one of [1] to [5], in which the ratio ($I_{430}/I_{550}$) of absorbance of light having a wavelength of 550 nm to absorbance of light having a wavelength of 430 nm is 18 or more.

[7] The ink composition according to any one of [1] to [6], in which the polymer dispersant is a graft copolymer and/or a block copolymer including a polymer chain A and a polymer chain B, the polymer chain A includes 20 mass% to 60 mass% of a structural unit derived from a cycloalkyl group-containing (meth)acrylate, 10 mass% to 35 mass% of a structural unit derived from a (meth)acrylic acid, and 5.0 mass% to 70 mass% of a structural unit derived from a (meth)acrylate not containing a cycloalkyl group, the polymer chain A has a number average molecular weight of 1,000 to 10,000, and the polymer chain B includes 30 mass% to 70 mass% of a structural unit derived from a cycloalkyl group-containing (meth)acrylate, and 30 mass% to 70 mass% of a structural unit derived from at least one of a vinyl monomer having an aromatic ring and a (meth)acrylate having an aromatic ring.

[8] An ink set including: a yellow ink composition; a cyan ink composition; and a magenta ink composition, in which the yellow ink composition is the ink composition according to any one of [1] to [7], the cyan ink composition includes a cyan pigment and a styrene acrylic polymer dispersant, and the magenta ink composition includes a magenta pigment and a styrene acrylic polymer dispersant.

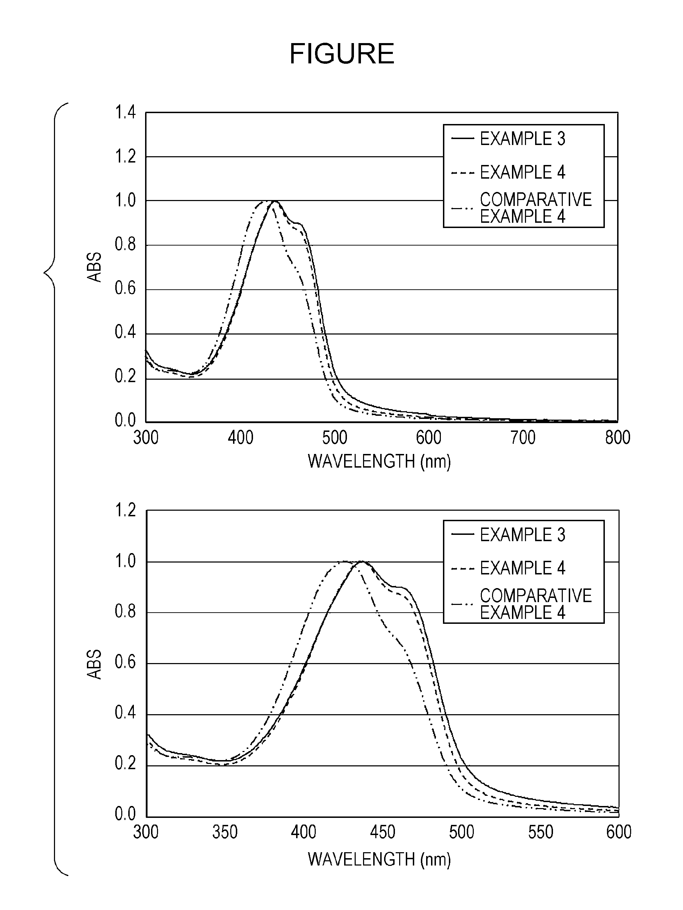

BRIEF DESCRIPTION OF THE DRAWING

The invention will be described with reference to the accompanying drawings, wherein like numbers reference like elements.

The figure shows charts of absorption wavelengths of ink compositions of Examples 3 and 4 and Comparative Example 4. Other Examples are also similar to Examples 3 and 4.

DESCRIPTION OF EXEMPLARY EMBODIMENTS

Hereinafter, an embodiment of the invention (hereinafter, referred to as "present embodiment") will be described in detail, but the invention is not limited thereto. Various modifications can be made within the scope of the invention as defined by the claims. In the present specification, "(meth)acrylate" means both acrylate and methacrylate corresponding thereto.

Ink composition

The ink composition of yellow ink according to the present embodiment includes a pigment; a polymer dispersant; water; and a water-soluble organic solvent, in which the pigment includes Pigment Yellow 74, and the integrated value of absorbance of light having a wavelength of 300 nm to 400 nm is 30 % or less with respect to 100% of the integrated value of absorbance of light having a wavelength of 300 nm to 600 nm.

Absorbance

The integrated value of absorbance of light having a wavelength of 300 nm to 400 nm in the ink composition of yellow ink is 30 % or less, preferably 0% to 25%, and more preferably 0% to 20%, with respect to 100% of the integrated value of absorbance of light having a wavelength of 300 nm to 600 nm. When the integrated value of absorbance of light having a wavelength of 300 nm to 400 nm is within the above range, light resistance is further improved. The reason for this is because the absorption wavelength of the Pigment Yellow 74-containing yellow ink is shifted to a long-wavelength region to avoid the ultraviolet region as much as possible. The integrated value of absorbance of light having a wavelength of 300 nm to 400 nm in the ink composition of yellow ink can be measured by the methods described in Examples.

In addition, the integrated value of absorbance of light having a wavelength of 500 nm to 600 nm in the ink composition of yellow ink is preferably 10.0% or less, more preferably 0% to 8.0 mass%, and further preferably 0% to 5.0%, with respect to 100% of the integrated value of absorbance of light having a wavelength of 300 nm to 600 nm. When the integrated value of absorbance of light having a wavelength of 500 nm to 600 nm in yellow ink is within the above range, green color developing properties tend to be further improved when yellow ink is combined with magenta ink and cyan ink et al. to be used as an ink set. The integrated value of absorbance of light having a wavelength of 500 nm to 600 nm in the ink composition can be measured by the methods described in Examples.

Meanwhile, the ratio ($I_{430}/I_{550}$) of the absorbance of light having a wavelength of 550 nm to the absorbance of light having a wavelength of 430 nm in the ink composition of yellow ink is preferably 10 or more, more preferably 20 or more, and further preferably 30 or more. The upper limit of the ratio ($I_{430}/I_{550}$) is not particularly limited, but the larger it is, the more preferable. More preferably, the upper limit thereof is 1000. When the ratio ($I_{430}/I_{550}$) is within the above range, color reproducibility tends to be further wider.

Maximum absorption wavelength

The maximum absorption wavelength of the ink composition of yellow ink is preferably 420 nm to 450 nm, more preferably 425 nm to 445 nm, and further preferably 430 nm to 440 nm. The maximum absorption wavelength of the ink composition of yellow ink can be measured by the methods described in Examples.

Pigment

The pigment includes Pigment Yellow 74. When yellow ink contains Pigment Yellow 74, yellow color developing properties are further improved. The yellow ink may contain other yellow pigments as the pigment in addition to Pigment Yellow 74. Other yellow pigments are not particularly limited, but examples thereof include C.I. Pigment Yellows 1, 2, 3, 4, 5, 6, 7, 10, 11, 12, 13, 14, 16, 17, 24, 34, 35, 37, 53, 55, 65, 73, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

The content of the pigment is preferably 1 mass% to 10 mass%, more preferably 2 mass% to 8 mass%, and further preferably 3 mass% to 6 mass%, with respect to the total amount of the ink composition. When the content of the pigment is less than 1 mass%, sufficient color development cannot be obtained. Further, when the content of the pigment is more than 10.0 mass%, ejection stability deteriorates.

Polymer dispersant

The polymer dispersant is not particularly limited, but examples thereof include polyvinyl alcohols, polyvinyl pyrrolidones, a polyacrylic acid, an acrylic acid-acrylonitrile copolymer, a vinyl acetate-acrylic ester copolymer, an acrylic acid-acrylic ester copolymer, a styrene-acrylic acid copolymer, a styrene-methacrylic acid copolymer, a styrene-methacrylic acid-acrylic ester copolymer, a styrene-α-methyl styrene-acrylic acid copolymer, a styrene-α-methyl styrene-acrylic acid-acrylic ester copolymer, a styrene-maleic acid copolymer, a styrene-maleic anhydride copolymer, a vinyl naphthalene-acrylic acid copolymer, a vinyl naphthalene-maleic acid copolymer, a vinyl acetate-maleic ester copolymer, a vinyl acetate-crotonic acid copolymer, a vinyl acetate-acrylic acid copolymer, and salts thereof. Among these, particularly, copolymers of monomers having a hydrophobic functional group and monomers having a hydrophilic functional group, and polymers composed of monomers having both a hydrophobic functional group and a hydrophilic functional group are preferable. As the form of the copolymer, any form of a random copolymer, a block copolymer, an alternating copolymer, and a graft copolymer can be used.

Among these, as the polymer dispersant, a polymer having a structural unit derived from a cycloalkyl group-containing (meth)acrylate is preferable. When such a polymer dispersant is used, the refractive index of the polymer dispersant increases, and the amount of ultraviolet light absorbed by the pigment decreases, so that light resistance tends to be further improved. In addition, when such a polymer dispersant is used, the absorption wavelength of the ink composition is changed, and, in the case where the polymer dispersant is used as an ink set, the amount of red components is reduced, and green color saturation tends to be further improved.

Among these, as the polymer dispersant, a graft copolymer and/or a block copolymer including the following polymer chain A and the following polymer chain B is preferable. Specific examples of the graft copolymer and/or the block copolymer include graft copolymers including a polymer chain A grafted with a plurality of polymer chains B, graft copolymers including a polymer chain B grafted with a plurality of polymer chains A, and block copolymers having a block including the polymer chain A and a block including the polymer chain B. The block copolymers are not particularly limited, but examples thereof include di-block copolymers, tetra-block copolymers, and hexa-block copolymers. When such a polymer dispersant is used, light resistance and color developing properties tend to be further improved.

Polymer chain A

The polymer chain A includes 20 mass% to 60 mass% of a structural unit derived from a cycloalkyl group-containing (meth)acrylate, 10 mass% to 35 mass% of a structural unit derived from a (meth)acrylic acid, and 5 mass% to 70 mass% of a structural unit derived from a (meth)acrylate not containing a cycloalkyl group. The carboxyl group contained in the structural unit derived from a (meth)acrylic acid is ionized by being neutralized with an alkali. Therefore, the polymer chain A including the structural unit derived from a (meth)acrylic acid is relatively hydrophilic compared to the polymer chain B, and contributes to the dispersibility of the pigment.

The cycloalkyl group-containing (meth)acrylate is not particularly limited, but examples thereof include cyclohexyl (meth)acrylate, methylcyclohexyl (meth)acrylate, 3,3,5-trimethylcyclohexyl (meth)acrylate, t-butylcyclohexyl (meth)acrylate, cyclohexyloxyethyl (meth)acrylate, tricyclodecyl (meth)acrylate, and isobornyl (meth)acrylate. Among these, cyclohexyl (meth)acrylate and 3,3,5-trimethylcyclohexyl (meth)acrylate are preferable. When such a cycloalkyl group-containing (meth)acrylate is used, light resistance and color developing properties tend to be further improved. These cycloalkyl group-containing (meth)acrylates may be used alone or in combination with two or more thereof.

The carbon number of a cycloalkyl group is preferably 6 to 9. When the carbon number of a cycloalkyl group is within the above range, light resistance and color developing properties tend to be further improved.

The content of the structural unit derived from the cycloalkyl group-containing (meth)acrylate is preferably 20 mass% to 60 mass%, and more preferably 30 mass% to 50 mass%, with respect to 100 mass% of the polymer chain A. When the content of the structural unit derived from the cycloalkyl group-containing (meth)acrylate is 20 mass% or more, light resistance and color developing properties tend to be further improved. Further, when the content of the structural unit derived from the cycloalkyl group-containing (meth)acrylate is more than 60 mass%, the dispersion stability of the pigment deteriorates.

The content of the structural unit derived from the (meth)acrylic acid is preferably 10 mass% to 35 mass%, and more preferably 15 mass% to 25 mass%, with respect to 100 mass% of the polymer chain A. When the content of the structural unit derived from the (meth)acrylic acid is 10 mass% or more, water-solubility tends to be further improved. Further, when the content of the structural unit derived from the (meth)acrylic acid is 35 mass% or less, the water resistance of the printed matter tends to be further improved. The carboxyl group of a (meth)acrylic acid may form bases and salts.

The (meth)acrylate not containing a cycloalkyl group is not particularly limited, but examples thereof include: aliphatic alkyl (meth)acrylates, such as methyl (meth)acrylate, butyl (meth)acrylate, and dodecyl (meth)acrylate; aromatic (meth)acrylates, such as phenyl (meth)acrylate and benzyl (meth)acrylate; hydroxyl group-containing (meth)acrylate, such as 2-hydroxyethyl (meth)acrylate and 2-hydroxypropyl (meth)acrylate; ether group or chain-containing (meth)acrylates, such as (poly) ethylene glycol monoalkyl ether (meth)acrylate; and amino group-containing (meth)acrylates, such as dimethylaminoethyl (meth)acrylate. These (meth)acrylates not containing a cycloalkyl group may be used alone or in combination with two or more thereof.

The content of the structural unit derived from the (meth)acrylate not containing a cycloalkyl group is 5.0 mass% to 70 mass% with respect to 100 mass% of the polymer chain A.

The number average molecular weight of the polymer chain A is preferably 1,000 to 10,000, and more preferably 2,000 to 7,000. When the number average molecular weight of the polymer chain A is less than 1,000, the rate of hydrophilic portions occupying the polymer dispersant becomes low, so that sufficient steric repulsion cannot be obtained, and thus dispersion stability of the pigment deteriorates. Further, when the number average molecular weight of the polymer chain A is more than 10,000, the ratio of hydrophilic portion occupying the polymer dispersant becomes high, so that a polymer is detached from the surface of the pigment, and thus the dispersion stability of the pigment deteriorates. Here, the number average molecular weight can be obtained as the polystyrene conversion molecular weight by using gel permeation chromatography (hereinafter, referred to as "GPC").

The content of the polymer chain A is preferably 30 mass% to 70 mass%, more preferably 40 mass% to 60 mass%, and further preferably 40 mass% to 50 mass%, with respect to 100 mass% of the total amount of the polymer dispersant. When the content of the polymer chain A is 30 mass% or more, the steric repulsion of the polymer dispersant becomes sufficient, and thus the dispersion stability of the pigment tends to be further improved. In contrast, when the content of the polymer chain A is more than 70 mass%, the polymer dispersant is detached from the surface of the pigment, and thus the dispersion stability of the pigment deteriorates. Polymer chain B

The polymer chain B includes 30 mass% to 70 mass% of a structural unit derived from a cycloalkyl group-containing (meth)acrylate, and 30 mass% to 70 mass% of a structural unit derived from at least one of a vinyl monomer having an aromatic ring and a (meth)acrylate having an aromatic ring. The polymer chain B is relatively hydrophobic compared to the polymer chain A, and can be adsorbed on the pigment by hydrophobic interaction to coat (encapsulate) the pigment.

The cycloalkyl group-containing (meth)acrylate is not particularly limited, but examples thereof include those exemplified in the polymer chain A. The cycloalkyl group-containing (meth)acrylate exemplified in the polymer chain A may be the same as or different from the cycloalkyl group-containing (meth)acrylate of the polymer chain B. Among these, cyclohexyl (meth)acrylate and 3,3,5-trimethylcyclohexyl (meth)acrylate are preferable. When such a cycloalkyl group-containing (meth)acrylate is used, the dispersion stability of the pigment tends to be further improved.

The content of the structural unit derived from the cycloalkyl group-containing (meth)acrylate is preferably 30 mass% to 70 mass%, and more preferably 40 mass% to 60 mass%, with respect to 100 mass% of the polymer chain B. When the content of the structural unit derived from the cycloalkyl group-containing (meth)acrylate is 30 mass% or more, the polymer dispersant is easily adsorbed on the surface of the pigment, and thus the dispersion stability of the pigment tends to be further improved. Further, when the content of the structural unit derived from the cycloalkyl group-containing (meth)acrylate is more than 70 mass%, the hydrophobicity of the polymer dispersant becomes high, and thus, conversely, the dispersion stability of the pigment tends to deteriorate.

The vinyl monomer having an aromatic ring is not particularly limited, but examples thereof include vinyl toluene and vinyl naphthalene. When such a vinyl monomer having an aromatic ring is used, the adsorptivity of the polymer dispersant onto the surface of the pigment tends to be further improved.

The content of the structural unit derived from the vinyl monomer having an aromatic ring (when a (meth)acrylate having an aromatic ring is not used) is preferably 30 mass% to 70 mass%, and more preferably 40 mass% to 60 mass%, with respect to 100 mass% of the polymer chain B. When the content of the structural unit derived from the vinyl monomer having an aromatic ring is 30 mass% or more, the polymer dispersant is easily adsorbed on the surface of the pigment, and thus the dispersion stability of the pigment tends to be further improved. Further, when the content of the structural unit derived from the vinyl monomer having an aromatic ring is more than 70 mass%, the hydrophobicity of the polymer dispersant becomes high, and thus, conversely, the dispersion stability of the pigment tends to deteriorate.

The (meth)acrylate having an aromatic ring is not particularly limited, but examples thereof include phenyl (meth)acrylate, naphthoxy (meth)acrylate, benzyl (meth)acrylate, phenoxyethyl (meth)acrylate, and para-cumylphenol ethylene oxide-modified (meth)acrylate. When such a (meth)acrylate having an aromatic ring is used, the pigment coverage of the polymer dispersant tends to be further improved.

The content of the structural unit derived from the (meth)acrylate having an aromatic ring (when a vinyl monomer having an aromatic ring is not used) is preferably 30 mass% to 70 mass%, and more preferably 40 mass% to 60 mass%, with respect to 100 mass% of the polymer chain B. When the content of the structural unit derived from the (meth)acrylate having an aromatic ring is 30 mass% or more, the polymer dispersant is easily adsorbed on the surface of the pigment, and thus the dispersion stability of the pigment tends to be further improved. Further, when the content of the structural unit derived from the (meth)acrylate having an aromatic ring is more than 70 mass%, the hydrophobicity of the polymer dispersant becomes high, and thus, conversely, the dispersion stability of the pigment tends to deteriorate.

The total content of the structural unit derived from both the vinyl monomer having an aromatic ring and the structural unit derived from the (meth)acrylate having an aromatic ring is preferably 30 mass% to 70 mass%, and more preferably 40 mass% to 60 mass%, with respect to 100 mass% of the polymer chain B. When the total content of the structural unit derived from the vinyl monomer having an aromatic ring and the structural unit derived from the (meth)acrylate having an aromatic ring is 30 mass% or more, the polymer dispersant is easily adsorbed on the surface of the pigment, and thus the dispersion stability of the pigment tends to be further improved. Further, when the total content of the structural unit derived from the vinyl monomer having an aromatic ring and the structural unit derived from the (meth)acrylate having an aromatic ring is more than 70 mass%, the hydrophobicity of the polymer dispersant becomes high, and thus, conversely, the dispersion stability of the pigment tends to deteriorate.

The polymer chain B may include a structural unit derived from a (meth)acrylate not containing a cycloalkyl group. The (meth)acrylate not containing a cycloalkyl group is not particularly limited, but examples thereof include those exemplified in the polymer chain A. The (meth)acrylate not containing a cycloalkyl group exemplified in the polymer chain A may be the same as or different from the (meth)acrylate not containing a cycloalkyl group of the polymer chain B.

The number average molecular weight of the polymer dispersant is preferably 2,000 to 20,000, more preferably 5,000 to 15,000, and further preferably 7,000 to 12,000. When the number average molecular weight thereof is less than 2,000, dispersion stability deteriorates. Further, when the number average molecular weight thereof is more than 20,000, the viscosity of a dispersion liquid becomes high, and thus the dispersion of the pigment does not proceed at the time of the preparation of the dispersion liquid.

Synthesis method of graft copolymer

The graft copolymer can be synthesized based on methods known in the related art. Specific examples of the methods known in the related art include: a macromonomer method of polymerizing a macromonomer (polymer chain A) having an unsaturated bond for radical polymerization at one terminal thereof with a monomer which is a constituent of polymer chain B; a side chain polymerization method of polymerizing monomers, which are constituents of polymer chain A, in the presence of polymer chain B bonded with a polymerization initiating group; and a polymer reaction method, in which polymer chain A having reactive group "X" introduced at one terminal is polymerized with a monomer having functional group "Y" capable of reacting with the reactive group "X" to prepare polymer chain B having functional group "Y" at the side chain thereof, and the polymer chain A and polymer chain B are reacted. The graft copolymer can be synthesized by any of these synthesis methods, but, among these, the macromonomer method is preferable.

The macromonomer can be synthesized based on methods known in the related art. Specific examples of the methods known in the related art include: a method of polymerizing (meth)acrylate along with depolymerization at high temperature and high pressure to introduce an unsaturated bond at a terminal; a method of introducing a hydroxyl group at a terminal using a chain transfer agent having a functional group, such as a thiol group or a hydroxyl group, and reacting a monomer having a functional group capable of reacting with the introduced hydroxyl group; a method of performing irreversible addition cleavage chain transfer polymerization using a vinyl monomer (for example, an $\alpha$-bromomethyl acrylate-based compound, an $\alpha$-methylstyrene dimer, or a methyl methacrylate dimer) having an easily detachable group as a radical at the position $\alpha$, as a chain transfer agent; and, in the following living radical polymerization method, a method of obtaining a macromonomer by obtaining a polymer using a polymerization initiating compound having a functional group such as a hydroxyl group or a halogen and adding a compound having an unsaturated bond capable of reacting with the functional group to introduce an unsaturated bond at a terminal.

When the macromonomer obtained in this way is polymerized with the monomer, which is a constituent of the polymer chain B, based on a method known in the related art, such as a general radical polymerization method or the following living radical polymerization method, it is possible to obtain a targeted graft copolymer.

Synthesis method of block copolymer

The synthesis method of a block copolymer is not particularly limited, but examples thereof include a living cationic polymerization method, a living anionic polymerization method, and a living radical polymerization method.

Specific examples of the living radical polymerization method include: an NMP method in which a compound capable of producing a nitroxide radical is used; an ATRP method in which a halogenated compound is used as a polymerization initiating compound, and polymerization is livingly performed from the polymerization initiating compound using a metal complex such as a copper complex or a ruthenium complex; a RAFT method in which a dithiocarboxylic ester or a xanthate compound is used; a TERP method in which an organic tellurium compound is used as a polymerization initiating compound; and a RTCP method in which an iodine compound is used as a polymerization initiating compound, and a phosphorus compound, a nitrogen compound, a carbon compound, or an oxygen compound is used as a catalyst.

These living radical polymerization methods can be carried out under polymerization conditions known in the related art. For example, the living radical polymerization may be carried out under a condition of bulk polymerization, suspension polymerization, emulsion polymerization, or solution polymerization. Here, in the case of solution polymerization, the reaction solution after polymerization may be directly used as a solution of a polymer dispersant, the solvent having been used for polymerization may be replaced with another solvent, and only a block copolymer may be extracted by performing precipitation one time in a poor solvent. Among these, it is preferable that solution polymerization is carried out by using the organic solvent contained in the ink jet ink as a solvent for polymerization. Therefore, only by adding an alkali to the reaction solution after polymerization to neutralize a block copolymer, the block copolymer can be easily used as a polymer dispersant.

When the graft copolymer or block copolymer, obtained as described above, is neutralized (made into an aqueous solution) with an alkali, it can be used as the polymer dispersant. Specific examples of the alkali may include: ammonia; alkylamines, such as trimethylamine and triethylamine; glycol-based amines, such as diethanolamine and triethanolamine; cyclic amines, such as morpholine and pyridine; and hydroxides, such as sodium hydroxide and potassium hydroxide. It is preferable that the amount of the alkali used is the molar equivalent or more of a carboxyl group contained in the graft copolymer or block copolymer.

Water

Examples of water include water from which as many as possible ionic impurities are removed, for example, pure water or ultrapure water such as ion exchange water, ultra-filtrated water, reverse osmosis water, and distilled water. In addition, when water sterilized by irradiation with ultraviolet light, the addition of hydrogen peroxide, or the like, is used, it is possible to prevent the generation of mold or bacteria during long-term storage of the ink. Accordingly, the storage stability of the ink composition tends to be further improved.

The content of water is preferably 50 mass% to 90 mass%, and more preferably 60 mass% to 80 mass%, with respect to the total amount of the ink composition. Water-soluble organic solvent

The water-soluble organic solvent is not particularly limited, but examples thereof include alcohols or glycols such as glycerin, ethylene glycol, diethylene glycol, triethylene glycol, propylene glycol, dipropylene glycol, 1,3-propanediol, 1,2-butanediol, 1,2-pentanediol, 1,2-hexanediol, 1,4-butanediol, 1,5-pentanediol, 1,6-hexanediol, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol monobutyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-propyl ether, dipropylene glycol mono-iso-propyl ether, diethylene glycol dimethyl ether, diethylene glycol diethyl ether, diethylene glycol dibutyl ether, diethylene glycol ethyl methyl ether, diethylene glycol butyl methyl ether, triethylene glycol dimethyl ether, tetraethylene glycol dimethyl ether, dipropylene glycol dimethyl ether, dipropylene glycol diethyl ether, tripropylene glycol dimethyl ether, methanol, ethanol, n-propyl alcohol, iso-propyl alcohol, n-butanol, 2-butanol, tert-butanol, iso-butanol, n-pentanol, 2-pentanol, 3-pentanol, and tert-pentanol; N,N-dimethylformamide; N,N-dimethylacetamide; 2-pyrrolidone; N-methyl-2-pyrrolidone; 2-oxazolidone; 1,3-dimethyl-2-imidazolidinone; dimethyl sulfoxide; sulfolane; and 1,1,3,3-tetramethyl urea. These water-soluble organic solvents may be used alone or in combination with two or more thereof.

Among these, 1,2-hexanediol, diethylene glycol mono-n-butyl ether, and triethylene glycol mono-n-butyl ether are preferable, and 1,2-hexanediol is more preferable. When such a water-soluble organic solvent is used, the permeability of the ink composition into a medium tends to be further improved.

The content of the water-soluble organic solvent is preferably 5 mass% to 30 mass%, and more preferably 10 mass% to 20 mass%, with respect to the total amount of the ink composition. When the content of the water-soluble organic solvent is within the above range, the dispersion stability of the pigment and the suppression of the evaporation and thickening of the ink composition in the vicinity of a nozzle are compatible with each other. Surfactant

The ink composition of the present embodiment may further contain a surfactant. The surfactant is not particularly limited, but examples thereof include an acetylene glycol-based surfactant, a fluorine-based surfactant, and a silicone-based surfactant. Among these, the silicone-based surfactant is preferable.

The acetylene glycol-based surfactant is not particularly limited, but preferable examples thereof include one or more selected from an alkylene oxide adduct of 2,4,7,9-tetramethyl-5-decyne-4,7-diol and an alkylene oxide adduct of 2,4,7,9-tetramethyl-5-decyne-4,7-diol, and an alkylene oxide adduct of 2,4-dimethyl-5-decyne-4-ol and an alkylene oxide adduct of 2,4-dimethyl-5-decyne-4-ol. The commercially available products of the acetylene glycol-based surfactant are not particularly limited, but examples thereof include an Olfine 104 series or an E series such as Olfine E1010 (trade name, manufactured by Air Products Japan, Inc.), and Surfynol 465 or Surfynol 61 (trade name, manufactured by Nissin Chemical Industry Co., Ltd.). The acetylene glycol-based surfactants may be used alone or in combination of two or more thereof.

The fluorine-based surfactant is not particularly limited, but examples thereof include perfluoroalkyl sulfonate ester, perfluoroalkyl carboxylate, perfluoroalkyl phosphate, a perfluoroalkyl ethylene oxide adduct, perfloroalkyl betaine, and a perfluoroalkyl amine oxide compound. The commercially available products of the fluorine-based surfactant are not particularly limited, but examples thereof include S-144 and S-145 (manufactured by Asahi Glass Co., Ltd.); FC-170C, FC-430, and Fluorad-FC4430 (manufactured by Sumitomo 3M, Ltd.); FSO, FSO-100, FSN, FSN-100, and FS-300 (manufactured by Dupont Co.); and FT-250 and FT-251 (Neos Co., Ltd.). The fluorine-based surfactants may be used alone or in combination of two or more thereof.

The silicone-based surfactant is not particularly limited, but examples thereof include a polysiloxane-based compound, polyether-modified organosiloxane, and the like. The commercially available products of the silicone-based surfactant are not particularly limited, but specific examples thereof include BYK-306, BYK-307, BYK-333, BYK-341, BYK-345, BYK-346, BYK-347, BYK-348, and BYK-349 (trade names, manufactured by BYK Japan K.K.); and KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (trade names, manufactured by Shin-Etsu Chemical Co., Ltd.).

The content of the surfactant is preferably 0.1 mass% to 5.0 mass%, and more preferably 0.2 mass% to 3.0 mass%, with respect to the total mass of the ink composition. When the content of the surfactant is within the above range, the filling ability of a printer with ink and the wettability of ink into a medium tend to be further improved. Other Components

The ink composition used in the present embodiment, if necessary, may further contain various additives, such as dissolution aids, viscosity modifiers, pH adjusting agents, antioxidants, preservatives, anti-mold agents, corrosion inhibitors, and chelating agents for capturing a metal ion that influences the dispersion.

Ink set

The ink set of the present embodiment includes yellow ink, cyan ink, and magenta ink. Here, the yellow ink is composed of the above ink composition, the cyan ink contains a cyan pigment and a styrene acrylic polymer dispersant, and the magenta ink contains a magenta pigment and a styrene acrylic polymer dispersant. When the ink set contains the styrene acrylic polymer dispersant, there is an effect of fixing and dispersing. When the above ink composition is used as the yellow ink, the color saturation and light resistance of the obtained recorded matter are further improved. In addition, in the cyan ink and the magenta ink, when the styrene acrylic polymer dispersant is used, the color saturation of the obtained recorded matter is further improved. Since each of the cyan pigment and the magenta pigment generally has excellent light resistance compared to the yellow pigment, it is preferable to use the styrene acrylic polymer dispersant rather than the above dispersant, from the viewpoint of color saturation being further improved. Meanwhile, since the yellow pigment has a relatively low light resistance, when the above ink composition is used, both light resistance and color saturation can be improved.

Yellow ink

Yellow ink is the above ink composition.

Cyan ink

Cyan ink contains a cyan pigment and a styrene acrylic polymer dispersant, and, if necessary, may further include water, a water-soluble organic solvent, a surfactant, and other components.

The cyan pigment is not particularly limited, but examples thereof include C.I. Pigment Blues 1, 2, 3, 15, 15:1, 15:2, 15:3, 15:34, 15:4, 16, 18, 22, 25, 60, 65, and 66, and C.I. Vat Blues 4 and 60.

The styrene acrylic polymer dispersant contained in the cyan ink is not particularly limited, but examples thereof include styrene-acrylic resins, such as a styrene-acrylic acid copolymer, a styrene-methacrylic acid copolymer, a styrene-methacrylic acid-acrylic ester copolymer, a styrene-$\alpha$-methyl styrene-acrylic acid copolymer, and a styrene-$\alpha$-methyl styrene-acrylic acid-acrylic acid ester copolymer. When the styrene acrylic polymer dispersant is used in the cyan ink, the dispersion stability of the pigment is further improved.

Water, a water-soluble organic solvent, a surfactant, and other components are not particularly limited, but examples thereof include those exemplified above. The water-soluble organic solvent, surfactant, and other components used in the cyan ink may be the same as or different from those used in the yellow ink.

Magenta ink

Magenta ink includes a magenta pigment and a styrene acrylic polymer dispersant, and, if necessary, may further include water, a water-soluble organic solvent, a surfactant, and other components.

The magenta pigment is not particularly limited, but examples thereof include C.I. Pigment Reds 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, and 245, and C.I. Pigment Violets 19, 23, 32, 33, 36, 38, 43, and 50.

The styrene acrylic polymer dispersant, water, water-soluble organic solvent, surfactant, and other components contained in the magenta ink are not particularly limited, but examples thereof are the same as those exemplified above. The water-soluble organic solvent, surfactant, and other components used in the magenta ink composition may be the same as or different from those used in the cyan ink composition. When the styrene acrylic polymer dispersant is used in the magenta ink composition, the dispersion stability of the pigment is further improved. Examples

Hereinafter, the invention will be described in detail using Examples and Comparative Examples. The invention is not limited to the following Examples. Materials for Ink Composition

Main materials for the ink compositions used in the following Examples and Comparative Examples are as follows.

Pigment

Pigment Yellow 74 (trade name "Seika Fast Yellow 2016G", manufactured by Dainichiseika Color & Chemicals Mfg. Co., Ltd.) (used in yellow ink)

Pigment Red 122 (trade name "Cyanine Blue A220JC, manufactured by Dainichiseika Color & Chemicals Mfg. Co., Ltd.) (used in magenta ink)

Pigment Blue 15:3 (trade name "CFR130P", manufactured by Dainichiseika Color & Chemicals Mfg. Co., Ltd.) (used in cyan ink)

Polymer dispersant

Graft copolymer

Graft copolymer G1 (produced in Synthesis Example 3 below)
Graft copolymer G2 (produced in Synthesis Example 4 below)
Graft copolymer G3 (produced in Synthesis Example 5 below)
Graft copolymer G4 (produced in Comparative Synthesis Example 3 below)
Graft copolymer G5 (produced in Comparative Synthesis Example 4 below)
Graft copolymer G6 (produced in Comparative Synthesis Example 5 below)
Random copolymer R1 (produced in Comparative Synthesis Example 6 below)

Block copolymer

Block copolymer B1 (produced in Synthesis Example 6 below)
Block copolymer B2 (produced in Synthesis Example 7 below)
Block copolymer B3 (produced in Synthesis Example 8 below)
Block copolymer B4 (produced in Comparative Synthesis Example 7 below)
Random copolymer R2 (produced in Comparative Synthesis Example 8 below)

Water-soluble organic solvent

Glycerin (manufactured by Kanto Chemical Co., Inc.)
1,2-hexanediol (manufactured by Kanto Chemical Co., Inc.)
Triethylene glycol (manufactured by Kanto Chemical Co., Inc.)
Triethanolamine (manufactured by Kanto Chemical Co., Inc.)

Surfactant

BYK-348 (manufactured by BYK Japan K.K.)
Hereinafter, a method of synthesizing a macromonomer used in the synthesis of a graft copolymer, a method of synthesizing a graft copolymer, and a method of synthesizing a block copolymer will be described.

Synthesis of macromonomer

Synthesis Example 1: macromonomer M2

250 parts of tripropylene glycol monomethyl ether (hereinafter, referred to as "MFTG"), 30 parts of MMA, 40 parts of CHMA, 30 parts of MAA, 2.5 parts of EBMA, and 1 part of V-601 were put into a reaction container provided with a stirrer, a reflux condenser, a thermometer, and a nitrogen inlet tube. Polymerization was carried out at 75°C for 3 hours while performing nitrogen bubbling, and then 0.5 parts of V-601 was added thereto. Polymerization was further carried out for 4.5 hours to obtain a polymer solution containing a polymer (macromonomer M2). When the obtained polymer solution was sampled, solid content concentration was measured, and a polymerization conversion rate was calculated from non-volatile content, the polymerization conversion rate was 100%. The number average molecular weight (hereinafter, referred to as "Mn") of the macromonomer M2, measured by a differential refractometer (hereinafter, referred to as "RI") of GPC, was 6,400, the weight average molecular weight thereof (hereinafter, referred to as "Mw") was 10,200, and the dispersion degree (Mw/Mn) thereof (hereinafter, referred to as "PDI") was 1.59. Meanwhile, peaks were hardly observed with an ultraviolet absorption detector (wavelength: 254 nm) (hereinafter, referred to as "UV detector").

The obtained polymer solution was poured into a large amount of water to precipitate a polymer, followed by filtering and cleaning. After being dissolved in THF, the polymer solution was poured into a large amount of water again to precipitate a polymer, followed by filtering and cleaning. Drying was carried out at 50°C for 24 hours by a dryer to obtain a polymer. When the 1H-NMR of the obtained polymer was measured using a nuclear magnetic resonance apparatus, the peak of a monomer and the peak of a proton of an unsaturated bond derived from EBMA were observed at 6 ppm and 6.4 ppm, respectively. Therefore, the obtained polymer is considered to be a macromonomer having an unsaturated bond at the terminal thereof. Even in the following Synthesis Examples, it was confirmed that the polymer obtained by performing the same measurement is a macromonomer.

Synthesis Example 2: macromonomer M3

250 parts of MFTG, 20 parts of MMA, 15 parts of ethyl methacrylate (hereinafter, referred to as "EMA"), 5 parts of hydroxyethyl methacrylate (hereinafter, referred to as "HEMA"), 40 parts of CHMA, 20 parts of MAA, 3.5 parts of EBMA, and 1 part of V-601 were put into a reaction container provided with a stirrer, a reflux condenser, a thermometer, and a nitrogen inlet tube. Polymerization was carried out at 75°C for 3 hours while performing nitrogen bubbling, and then 0.5 parts of V-601 was added thereto. Polymerization was further carried out for 4.5 hours to obtain a polymer solution containing a polymer (macromonomer M3). When the obtained polymer solution was sampled, solid content concentration was measured, and a polymerization conversion rate was calculated from non-volatile content, the polymerization conversion rate was 100%. Further, in this case, the Mn of the macromonomer M3 was 5,700, the Mw thereof was 9,700, and the PDI thereof was 1.70. Comparative Synthesis Example 1: macromonomer M4

250 parts of MFTG, 36 parts of MMA, 40 parts of butyl methacrylate (hereinafter, referred to as "BMA"), 24 parts of MAA, 2.5 parts of EBMA, and 1 part of V-601 were put into a reaction container provided with a stirrer, a reflux condenser, a thermometer, and a nitrogen inlet tube. Polymerization was carried out at 75°C for 3 hours while performing nitrogen bubbling, and then 0.5 parts of V-601 was added thereto. Polymerization was further carried out for 4.5 hours to obtain a polymer solution containing a polymer (macromonomer M4). When the obtained polymer solution was sampled, solid content concentration was measured, and a polymerization conversion rate was calculated from non-volatile content, the polymerization conversion rate was 100%. Further, in this case, the Mn of the macromonomer M4 was 6,300, the Mw thereof was 10,000, and the PDI thereof was 1.59. The macromonomer M4 is a macromonomer not having a cycloalkyl group.

Comparative Synthesis Example 2: macromonomer M5

250 parts of MFTG, 36 parts of MMA, 10 parts of ethyl methacrylate (hereinafter, referred to as "EMA"), 30 parts of 2-ethylhexyl methacrylate (hereinafter, referred to as "2-EHMA"), 24 parts of MAA, 2.5 parts of EBMA, and 1 part of V-601 were put into a reaction container provided with a stirrer, a reflux condenser, a thermometer, and a nitrogen inlet tube. Polymerization was carried out at 75°C for 3 hours while performing nitrogen bubbling, and then 0.5 parts of V-601 was added thereto. Polymerization was further carried out for 4.5 hours to obtain a polymer solution containing a polymer (macromonomer M5). When the obtained polymer solution was sampled, solid content concentration was measured, and a polymerization conversion rate was calculated from non-volatile content, the polymerization conversion rate was 100%. Further, in this case, the Mn of the macromonomer M5 was 7,400, the Mw thereof was 11,000, and the PDI thereof was 1.49. The macromonomer M5 is a macromonomer not having a cycloalkyl group.

Synthesis of graft copolymer

Synthesis Example 3: graft copolymer G1

300 parts of a solution of the macromonomer M2 was put into a reaction container A provided with a stirrer, a reflux condenser, a thermometer, and a nitrogen inlet tube, and heated to 80°C. Further, 67 parts of St, 33 parts of BA, and 2 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1 part of PBO was added thereto, and the mixture was heated to 85°C and further polymerized for 4 hours. The resulting product was neutralized by the addition of 16.1 parts of KOH and 183.9 parts of water, so as to obtain a polymer solution containing a polymer (copolymer G1). When the obtained polymer solution was sampled, solid content concentration was measured, and a polymerization conversion rate was calculated from non-volatile content, the polymerization conversion rate was 100%. Further, in this case, the Mn of the copolymer G1 was 11,400, the Mw thereof was 27,500, and the PDI thereof was 2.41.

Synthesis Example 4: graft copolymer G2

300 parts of a solution of the macromonomer M2 was put into a reaction container A provided with a stirrer, a reflux condenser, a thermometer, and a nitrogen inlet tube, and heated to 80°C. Further, 67 parts of St, 33 parts of HEMA, and 2 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1 part of PBO was added thereto, and the mixture was heated to 85°C and further polymerized for 4 hours. The resulting product was neutralized by the addition of 16.1 parts of KOH and 183.9 parts of water, so as to obtain a polymer solution containing a polymer (copolymer G2). When the obtained polymer solution was sampled, solid content concentration was measured, and a polymerization conversion rate was calculated from non-volatile content, the polymerization conversion rate was 100%. Further, in this case, the Mn of the copolymer G2 was 10,600, the Mw thereof was 22,800, and the PDI thereof was 2.15.

Synthesis Example 5: graft copolymer G3

50 parts of MFTG and 300 parts of a solution of macromonomer M3 were put into a reaction container A provided with a stirrer, a reflux condenser, a thermometer, and a nitrogen inlet tube, and heated to 80°C. Further, 67 parts of St, 33 parts of HEMA, and 2 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1 part of PBO was added thereto, and the mixture was heated to 85°C and further polymerized for 4 hours. The resulting product was neutralized by the addition of 16.1 parts of KOH and 183.9 parts of water, so as to obtain a polymer solution containing a polymer (copolymer G3). When the obtained polymer solution was sampled, solid content concentration was measured, and a polymerization conversion rate was calculated from non-volatile content, the polymerization conversion rate was 100%. Further, in this case, the Mn of the copolymer G3 was 9,800, the Mw thereof was 22,200, and the PDI thereof was 2.27.

Comparative Synthesis Example 3: graft copolymer G4

50 parts of MFTG and 300 parts of a solution of macromonomer M4 were put into a reaction container A provided with a stirrer, a reflux condenser, a thermometer, and a nitrogen inlet tube, and heated to 80°C. Further, 100 parts of St, 50 parts of BA, and 2.5 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1.25 parts of PBO was added thereto, and the mixture was heated to 85°C and further polymerized for 4 hours. The resulting product was neutralized by the addition of 16.2 parts of KOH and 233.8 parts of water, so as to obtain a polymer solution containing a polymer (copolymer G4). When the obtained polymer solution was sampled, solid content concentration was measured, and a polymerization conversion rate was calculated from non-volatile content, the polymerization conversion rate was 100%. Further, in this case, the Mn of the copolymer G4 was 14,000, the Mw thereof was 31,700, and the PDI thereof was 2.26. The copolymer G4 is a graft copolymer not having a cycloalkyl group in the grafted polymer.

Comparative Synthesis Example 4: graft copolymer G5

50 parts of MFTG and 300 parts of a solution of macromonomer M5 were put into a reaction container A provided with a stirrer, a reflux condenser, a thermometer, and a nitrogen inlet tube, and heated to 80°C. Further, 100 parts of St, 50 parts of HEMA, and 2.5 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1.25 parts of PBO was added thereto, and the mixture was heated to 85°C and further polymerized for 4 hours. The resulting product was neutralized by the addition of 16.2 parts of KOH and 233.8 parts of water, so as to obtain a polymer solution containing a polymer (copolymer G5). When the obtained polymer solution was sampled, solid content concentration was measured, and a polymerization conversion rate was calculated from non-volatile content, the polymerization conversion rate was 100%. Further, in this case, the Mn of the copolymer G5 was 15,600, the Mw thereof was 37,000, and the PDI thereof was 2.37. The copolymer G5 is a graft copolymer not having a cycloalkyl group in the grafted polymer (polymer chain A).

Comparative Synthesis Example 5: graft copolymer G6

50 parts of MFTG and 300 parts of a solution of macromonomer M2 were put into a reaction container A provided with a stirrer, a reflux condenser, a thermometer, and a nitrogen inlet tube, and heated to 80°C. Further, 100 parts of MMA, 50 parts of BA, and 2.5 parts of PBO were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1.25 parts of PBO was added thereto, and the mixture was heated to 85°C and further polymerized for 4 hours. The resulting product was neutralized by the addition of 16.2 parts of KOH and 233.8 parts of water, so as to obtain a polymer solution containing a polymer (copolymer G6). When the obtained polymer solution was sampled, solid content concentration was measured, and a polymerization conversion rate was calculated from non-volatile content, the polymerization conversion rate was 85%. Further, in this case, the Mn of the copolymer G6 was 10,200, the Mw thereof was 23,000, and the PDI thereof was 2.25. The copolymer G6 is a graft copolymer not having an aromatic ring or a cycloalkyl group in the main chain (polymer chain B).

Synthesis method of random copolymer

Comparative Synthesis Example 6: random copolymer R1

250 parts of MFTG was put into a reaction container A provided with a stirrer, a reflux condenser, a thermometer, and a nitrogen inlet tube, and heated to 80°C. Further, 36 parts of MMA, 40 parts of CHMA, 24 parts of MAA, 100 parts of St, 50 parts of BA, and 7.5 parts of azobisisobutyronitrile (hereinafter, referred to as "AIBN") were put into another reaction container, and stirred to prepare a monomer solution. 1/2 of this monomer solution was put into the reaction container A, and the residual 1/2 thereof was slowly dropped over 1 hour. After the completion of the dropping, polymerization was carried out for 3 hours. 1.25 parts of AIBN was added thereto, and the mixture was heated to 85°C and further polymerized for 4 hours. The resulting product was neutralized by the addition of 16.2 parts of KOH and 233.8 parts of water, so as to obtain a polymer solution containing a polymer (copolymer R1). When the obtained polymer solution was sampled, solid content concentration was measured, and a polymerization conversion rate was calculated from non-volatile content, the polymerization conversion rate was 100%. Further, in this case, the Mn of the copolymer R1 was 14,700, the Mw thereof was 30,600, and the PDI thereof was 2.08. The copolymer R1 is a random copolymer.

Synthesis of block copolymer

Synthesis Example 6: block copolymer B1

173 parts of MFTG, 1.0 part of iodine, 3.7 parts of 2,2'-azobis (4-methoxy-2,4-dimethylvaleronitrile) (hereinafter, referred to as "V-70"), 42 parts of CHMA, 17.6 parts of benzyl methacrylate (hereinafter, referred to as "BzMA"), and 0.17 parts of diphenylmethane (hereinafter, referred to as "DPM") were put into a reaction container provided with a stirrer, a reflux condenser, a thermometer, and a nitrogen inlet tube. Polymerization was carried out at 45°C for 5.5 hours while performing nitrogen bubbling to obtain a polymer solution. When the obtained polymer solution was sampled, solid content concentration was measured, and a polymerization conversion rate was calculated from non-volatile content, the polymerization conversion rate was 86%. The Mn of the polymer contained in the polymer solution was 5,000, and the PDI thereof was 1.19. Subsequently, the polymer solution was cooled to 40°C, 16.8 parts of CHMA, 20 parts of MMA, 12.9 parts of MAA, and 1.5 parts of V-70 were added thereto, and the mixture was polymerized for 3.5 hours. The resulting product was neutralized by the addition of 8.4 parts of KOH and 49.2 parts of water, so as to obtain a polymer solution containing a polymer (block copolymer B1). When the obtained polymer solution was sampled, solid content concentration was measured, and a polymerization conversion rate was calculated from non-volatile content, the polymerization conversion rate was 100%. Further, in this case, the Mn of the block copolymer B1 was 10,300, and the PDI thereof was 1.30. Here, based on the results of measuring the solid content concentration, ion exchange water was added to the obtained polymer solution to adjust the solid content concentration to 30%. In the following Synthesis Examples, the solid content concentration was adjusted to 30% in the same manner.

Synthesis Example 7: block copolymer B2

174 parts of MFTG, 1.0 part of iodine, 3.7 parts of V-70, 29.4 parts of CHMA, 30.8 parts of BzMA, and 0.17 parts of DPM were put into a reaction container provided with a stirrer, a reflux condenser, a thermometer, and a nitrogen inlet tube. Polymerization was carried out at 45°C for 5.5 hours while performing nitrogen bubbling to obtain a polymer solution. When the obtained polymer solution was sampled, solid content concentration was measured, and a polymerization conversion rate was calculated from non-volatile content, the polymerization conversion rate was 82%. Further, in this case, the Mn of the polymer contained in the polymer solution was 5,700, and the PDI thereof was 1.20. Subsequently, the polymer solution was cooled to 40°C, 16.8 parts of CHMA, 20 parts of MMA, 12.9 parts of MAA, and 1.5 parts of V-70 were added thereto, and the mixture was polymerized for 3.5 hours. The resulting product was neutralized by the addition of 8.4 parts of KOH and 49.2 parts of water, so as to obtain a polymer solution containing a polymer (block copolymer B2). When the obtained polymer solution was sampled, solid content concentration was measured, and a polymerization conversion rate was calculated from non-volatile content, the polymerization conversion rate was 100%. Further, in this case, the Mn of the block copolymer B2 was 10,300, and the PDI thereof was 1.31.

Synthesis Example 8: block copolymer B3

168 parts of MFTG, 1.0 part of iodine, 3.7 parts of V-70, 42 parts of CHMA, 13 parts of hydroxyethyl methacrylate (hereinafter, "HEMA"), and 0.17 parts of DPM were put into a reaction container provided with a stirrer, a reflux condenser, a thermometer, and a nitrogen inlet tube. Polymerization was carried out at 45°C for 5.5 hours while performing nitrogen bubbling to obtain a polymer solution. When the obtained polymer solution was sampled, solid content concentration was measured, and a polymerization conversion rate was calculated from non-volatile content, the polymerization conversion rate was 81%. Further, in this case, the Mn of the polymer contained in the polymer solution was 5,100, and the PDI thereof was 1.22. Subsequently, the polymer solution was cooled to 40°C, 16.8 parts of CHMA, 20 parts of MMA, 12.9 parts of MAA, and 1.5 parts of V-70 were added thereto, and the mixture was polymerized for 3.5 hours. The resulting product was neutralized by the addition of 8.4 parts of KOH and 47.6 parts of water, so as to obtain a polymer solution containing a polymer (block copolymer B3). When the obtained polymer solution was sampled, solid content concentration was measured, and a polymerization conversion rate was calculated from non-volatile content, the polymerization conversion rate was 100%. Further, in this case, the Mn of the block copolymer B3 was 9,600, and the PDI thereof was 1.33.

Comparative Synthesis Example 7: block copolymer B4

128 parts of MFTG, 1.0 part of iodine, 3.7 parts of V-70, 52.2 parts of BzMA, 9.8 parts of HEMA, and 0.17 parts of DPM were put into a reaction container provided with a stirrer, a reflux condenser, a thermometer, and a nitrogen inlet tube. Polymerization was carried out at 45°C for 5.5 hours while performing nitrogen bubbling to obtain a polymer solution. When the obtained polymer solution was sampled, solid content concentration was measured, and a polymerization conversion rate was calculated from non-volatile content, the polymerization conversion rate was 80%. Further, in this case, the Mn of the polymer contained in the polymer solution was 4,900, and the PDI thereof was 1.26. Subsequently, the polymer solution was cooled to 40°C, 20.8 parts of MMA, 40.8 parts of BMA, 15.0 parts of MAA, and 2.3 parts of V-70 were added thereto, and the mixture was polymerized for 3.5 hours. The resulting product was neutralized by the addition of 9.8 parts of KOH and 32.8 parts of water, so as to obtain a polymer solution containing a polymer (block copolymer B4). When the obtained polymer solution was sampled, solid content concentration was measured, and a polymerization conversion rate was calculated from non-volatile content, the polymerization conversion rate was 100%. Further, in this case, the Mn of the block copolymer B4 was 9,200, and the PDI thereof was 1.57.

Synthesis method of random copolymer

Comparative Synthesis Example 8: random copolymer R2

375 parts of MFTG was put into a reaction container A provided with a stirrer, a reflux condenser, a thermometer, and a nitrogen inlet tube, and heated to 80°C. Further, 110 parts of CHMA, 70 parts of BzMA, 40 parts of MMA, 30 parts of MAA, and 12 parts of azobisisobutyronitrile (hereinafter, referred to as "AIBN") were put into another reaction container, and stirred to prepare a monomer solution. 1/2 of this monomer solution was put into the reaction container A, and the residual 1/2 thereof was slowly dropped over a period of 1 hour. After the completion of the dropping, polymerization was carried out for 3 hours. 1.5 parts of AIBN was added thereto, and the mixture was heated to 85°C and further polymerized for 4 hours. The resulting product was neutralized by the addition of 19.6 parts of KOH and 105.4 parts of water, so as to obtain a polymer solution containing a polymer (random copolymer R2). When the obtained polymer solution was sampled, solid content concentration was measured, and a polymerization conversion rate was calculated from non-volatile content, the polymerization conversion rate was 100%. Further, in this case, the Mn of the random copolymer R2 was 12,100, and the PDI thereof was 2.28.

Preparation method of pigment dispersion

233.3 parts of the polymer solution containing the graft copolymer G1 obtained in the above Synthesis Example, 70 parts of diethylene glycol monobutyl ether, and 311.7 parts of water were mixed to obtain a semi-transparent solution having slight turbidity. 350 parts of azo-based yellow pigment PY-74 (trade name: "Seika Fast Yellow 2016G", manufactured by Dainichiseika Color & Chemicals Mfg. Co., Ltd.) was added to the solution, and the mixture was stirred for 30 minutes using a dispersing machine to prepare a mill base. Dispersion treatment was carried out at a peripheral speed of 10 m/s using a horizontal medium dispersing machine (trade name: "0.6 liter ECM type DYNOMILL", Shinmaru Enterprises Corporation, zirconia bead diameter: 0.5 mm), so as to sufficiently disperse pigment in the mill base. Then, 316 parts of water was added thereto to adjust pigment concentration to 18%. The mill base taken out from the dispersing machine was centrifugally separated (7,500 rotations for 20 minutes), and was then filtered with a 10 $\mu$m membrane filter. The resulting product was diluted with water, so as to obtain an aqueous pigment dispersion for ink jet (pigment concentration: 14%).

In addition, a pigment dispersion for a cyan ink composition and a pigment dispersion for a magenta ink composition were prepared in the same manner.

Preparation of ink composition

Materials were respectively mixed in the composition ratios given in Table 1 below, and sufficiently stirred to obtain ink compositions, respectively. In Table 1 below, the unit of numerical value is mass%, and the total is 100.0 mass%.

Measurement method of absorbance

The absorbance of each ink composition to light having a wavelength of 300 nm to 600 nm was measured using Spectrometer U-3300 manufactured by Hitachi Ltd according to the following procedures.
Step1: The ink composition of 0.3g is weighed and put in the graduated flask of 1L.
Step2: Pure water is added to the graduated flask of 1L so that gross weight may become 1L.
Step3: The absorbance characteristic is measured with the above-mentioned Spectrometer U-3300.
. However it would be possible to use any known method of obtaining the absorbance. Even if different machines are used to that described above, the same ratios of absorbance at different wavelengths or bands of wavelength can be expected to be obtained. From the obtained absorbance chart, the maximum absorption wavelength and the integrated value of absorbance in each wavelength band were calculated. The figure shows charts of absorption wavelengths of ink compositions (ink) of Examples 3 and 4 and Comparative Example 4. The charts of the figure are standardized so that the maximum value of the measured absorbance chart becomes 1. The absorbance (absorption wavelength characteristics) of yellow inks of Examples 1, 2, 5, and 6 are also approximately the same as the absorption wavelength characteristics of yellow inks of Examples 3 and 4. The absorbance (absorption wavelength characteristics) of yellow inks of Comparative Examples 1 to 3, 5, and 6 are also approximately the same as the absorption wavelength characteristic of yellow ink of Comparative Example 4. Although all of the inks of Examples 1 to 6 and Comparative Examples 1 to 6 are yellow inks containing Pigment Yellow 74 as a pigment, absorption wavelength characteristics of the yellow inks of Examples are shifted toward long wavelength, compared to in the yellow inks of Comparative Examples. Therefore, it is considered that the light resistance of the ink is improved because the deterioration of a color material is suppressed due to the reduction of absorbance in the ultraviolet region.

Table 1

| | Yellow composition | Magenta composition | Cyan composition |
|---|---|---|---|
| Pigment Yellow 74 | 5.0 | | |
| Pigment Red 122 | | 5.0 | |
| Pigment Blue 15:3 | | | 4.0 |
| | | | |
| Polymer dispersant (* kinds are described in Tables 2 and 3) | 2.5 | 2.5 | 2.0 |
| Glycerin | 10.0 | 10.0 | 10.0 |
| Triethylene glycol | 8.0 | 8.0 | 8.0 |
| 1,2-hexanediol | 4.0 | 4.0 | 4.0 |
| Triethanolamine | 1.0 | 1.0 | 1.0 |
| | | | |
| BYK 348 | 1.0 | 1.0 | 1.0 |
| Pure water | 68.5 | 68.5 | 70.0 |
| | 100.0 | 100.0 | 100.0 |

Table 2

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Composition | Pigment | PY74 | PY74 | PY74 | PY74 | PY74 | PY74 | PY74 | PY74 | PY74 | PY74 | PY74 | PY74 |
| | Polymer dispersant | G1 | G2 | G3 | B1 | B2 | B3 | G4 | G5 | G6 | R1 | B4 | R2 |
| Absorption characteristics | Ratio = (300-400nm) / (300-600nm) | 26% | 26% | 26% | 26% | 26% | 26% | 35% | 34% | 34% | 31% | 35% | 30% |
| | Ratio = (500-600nm) / (300-600nm) | 7% | 6% | 7% | 5% | 5% | 5% | 4% | 4% | 4% | 4% | 4% | 4% |
| Evaluation | Storage stability | 1 | 1 | 1 | 1 | 1 | 1 | 1 | 1 | 2 | 3 | 1 | 3 |
| | Light resistance | 1 | 1 | 1 | 1 | 1 | 1 | 3 | 3 | 3 | 2 | 3 | 2 |

In Table 2, all of the yellow inks contain Pigment Yellow 74. In the yellow inks of Examples 1 to 6 and Comparative Examples 1 to 6, the kind of polymer dispersant is changed. The absorption wavelengths of the yellow ink of Example 3 containing polymer dispersant G3 and the yellow ink of Example 4 containing polymer dispersant B1 are shifted to a long wavelength region from an ultraviolet region, as shown in the absorption wavelength characteristics of the figure. The yellow ink of Example 1 containing polymer dispersant G1, the yellow ink of Example 2 containing polymer dispersant G2, the yellow ink of Example 5 containing polymer dispersant B2, and the yellow ink of Example 6 containing polymer dispersant B3 also have approximately the same absorption wavelength characteristics as those of the yellow inks of Examples 3 and 4. In the absorption characteristics of the yellow inks of Examples 1 to 6, the ratio of (300 nm to 400 nm) / (300 nm to 600 nm) is 26%. The ratio of (500 nm to 600 nm) / (300 nm to 600 nm) is 5% to 7%. Storage stability is excellent (evaluation 1: good), and light resistance is excellent (evaluation 1: good). The absorption wavelength of the yellow ink of Comparative Example 4 containing polymer dispersant R1 is shifted to an ultraviolet region, as shown in the absorption wavelength characteristics of the figure. The yellow ink of Comparative Example 1 containing polymer dispersant G4, the yellow ink of Comparative Example 2 containing polymer dispersant G5, the yellow ink of Comparative Example 3 containing polymer dispersant G6, the yellow ink of Comparative Example 5 containing polymer dispersant B4, and the yellow ink of Comparative Example 6 containing polymer dispersant R2 also have approximately the same absorption wavelength characteristics as those of the yellow ink of Comparative Example 4. Regarding the absorption characteristics of the yellow inks of Comparative Examples 1 to 6, the ratio of (300 nm to 400 nm) / (300 nm to 600 nm) is 30% to 35%. The ratio of (500 nm to 600 nm) / (300 nm to 600 nm) is 4%. The storage stability and/or light resistance are poor (evaluation 2: slightly poor, evaluation 3: poor).

Table 3

|  |  | Ex. 7 | Ex. 8 | Comp. Ex.8 | Comp. Ex.9 | Comp. Ex.10 |
|---|---|---|---|---|---|---|
| Composition | Pigment Yellow 74 | B1 | G3 | B1 | G5 | G5 |
|  | Pigment Red 122 | G5 | G5 | B1 | G5 | B1 |
|  | Pigment Blue 15:3 | G5 | G5 | B1 | G5 | B1 |
| Evaluation | Color saturation: mixed color portion of Cyan and Yellow | 1 | 2 | 2 | 1 | 2 |
|  | Color saturation: mixed color portion of Magenta and Yellow | 1 | 1 | 3 | 1 | 1 |
|  | Light resistance | 1 | 1 | 1 | 3 | 3 |
| $I_{430}/I_{550}$ |  | 22 | 15 | 22 | 30 | 30 |

Storage stability of yellow ink composition

After each yellow ink composition was injected into an aluminum pack and the aluminum pack was sealed, each yellow ink composition was left for 6 days under an environment of 70°C. The ink composition before and after the leaving was diluted with pure water by 3,300 times, and the particle size distribution of the diluted solution was measured using the Microtrac UPA (manufactured by Nikkiso Co., Ltd.).

Evaluation criteria

1: The increment of average particle diameter after leaving is 0 nm or more and less than 30 nm.
2. The increment of average particle diameter after leaving is 30 nm or more and less than 100 nm.
3. The increment of average particle diameter after leaving is 100 nm or more.

(Evaluation 1: good, Evaluation 2: slightly poor, Evaluation 3: poor)

Color developing properties of ink set

The obtained yellow ink, cyan ink, and magenta ink are combined with each other as described in Table 3 to obtain an ink set. Subsequently, an ink jet printer (product name: PX-G930, manufactured by Seiko Epson Corporation) was filled with the each ink set. Then, it was confirmed that no nozzle is clogged and normal recording can be performed by filling a head of the printer with each ink composition. Thereafter, the following gradation pattern of mixed color was recorded on the EPOSON photo paper at a recording resolution of 1440 x 720 dpi, so as to obtain a recorded matter. The operating environment of the printer was 25°C.

Green gradation pattern: a pattern formed such that the ratio of Cyan and Yellow is 1: 1, in which a Duty of 5% to 100% is recorded at 5% intervals.

Red gradation pattern: a pattern formed such that the ratio of Magenta and Yellow is 1: 1, in which a Duty of 5% to 100% is recorded at 5% intervals.

Here, the "duty" is a value calculated by the following Equation. In other words, the "duty" may be a printing duty or a printing rate.

$$\text{Duty (\%)} = \text{number of dots actually printed} / (\text{vertical resolution} \times \text{horizontal resolution}) \times 100$$

(In the equation, the "number of actually printed dots" is the number of actually printed dots per unit area, and each of the "vertical resolution" and "horizontal resolution" is the resolution per unit area. The "duty 100%" means the maximum weight of monochromatic ink per unit pixel.

For each of the obtained recorded matter, the evaluation of color saturation C* was performed. Specifically, for each of the obtained recorded matter, the colorimetry of a* value and b* value was performed using a colorimeter (Gretag Macbeth Spectrolino, manufactured by X-Rite Inc.) to calculate color saturation C*. The color saturation C* was evaluated based on the following criteria.

Evaluation criteria

Green

1: maximum value of C* is 81 or more.
2: maximum value of C* is 79 or more and less than 81.
3: maximum value of C* is less than 79.

(Evaluation 1: good, Evaluation 2: slightly poor, Evaluation 3: poor)

Red

1: maximum value of C* is 91 or more (vivid).
2: maximum value of C* is 89 or more and less than 91 (slightly dull).
3: maximum value of C* is less than 89 (dull).

(Evaluation 1: good, Evaluation 2: slightly poor, Evaluation 3: poor)

Light resistance of yellow ink composition

An ink jet printer (product name: PX-G930) was filled with each of the obtained yellow ink composition. Then, it was confirmed that no nozzle is clogged and normal recording could be performed by filling a head of the printer with each yellow ink composition. A pattern was recorded on the EPSON photo paper using the yellow ink composition. The evaluation of light resistance was carried out under the following test conditions based on JEITA CP3901A. Thereafter, for each recorded matter, the colorimetry of a* value and b* value was performed using a colorimeter (Gretag Macbeth Spectrolino, manufactured by X-Rite Inc.). The light resistance was evaluated based on the following criteria.

Test conditions

Evaluation apparatus: Xenon light resistance tester XL75

(manufactured by Suga Test Instruments Co., Ltd.)
Temperature in vessel: 23°C
BPT: 35°C
Humidity: 50% R.H
Illuminance: 70 klx

Evaluation criteria

1: light resistance is 70 years or more
2: light resistance is 50 years to 70 years
3: light resistance is 50 years or less

(Evaluation 1: good, Evaluation 2: slightly poor, Evaluation 3: poor)

**Claims**

1. An ink composition comprising:

   a pigment;
   a polymer dispersant;
   water; and
   a water-soluble organic solvent,
   wherein the pigment includes Pigment Yellow 74, and
   the integrated value of absorbance of light having a wavelength of 300 nm to 400 nm of the ink composition is 30% or less with respect to 100% of the integrated value of absorbance of light having a wavelength of 300 nm to 600 nm of the ink composition.

2. The ink composition according to claim 1,
   wherein the integrated value of absorbance of light having a wavelength of 500 nm to 600 nm of the ink composition is 5.0% or less with respect to 100% of the integrated value of absorbance of light having a wavelength of 300 nm to 600 nm of the ink composition.

3. The ink composition according to any one of the preceding claims,
   wherein the maximum absorption wavelength of the ink composition is 430 nm to 450 nm.

4. The ink composition according to any one of the preceding claims,
   wherein the polymer dispersant is a polymer having a structural unit derived from a cycloalkyl group-containing (meth)acrylate.

5. The ink composition according to any one of the preceding claims,
   wherein the water-soluble organic solvent contains 1,2-hexanediol.

6. The ink composition according to any one of the preceding claims,
   wherein the ratio ($I_{430}/I_{550}$) of absorbance of light having a wavelength of 550 nm to absorbance of light having a wavelength of 430 nm of the ink composition is 18 or more.

7. The ink composition according to any one of the preceding claims,
   wherein the polymer dispersant is a graft copolymer and/or a block copolymer including a polymer chain A and a polymer chain B,

the polymer chain A includes 20 mass% to 60 mass% of a structural unit derived from a cycloalkyl group-containing (meth)acrylate, 10 mass% to 35 mass% of a structural unit derived from a (meth)acrylic acid, and 5.0 mass% to 70 mass% of a structural unit derived from a (meth)acrylate not containing a cycloalkyl group,

the polymer chain A has a number average molecular weight of 1,000 to 10,000, and

the polymer chain B includes 30 mass% to 70 mass% of a structural unit derived from a cycloalkyl group-containing (meth)acrylate, and 30 mass% to 70 mass% of a structural unit derived from at least one of a vinyl monomer having an aromatic ring and a (meth)acrylate having an aromatic ring.

8.  An ink set comprising:

a yellow ink composition;
a cyan ink composition; and
a magenta ink composition,
wherein the yellow ink composition is the ink composition according to any one of the preceding claims,
the cyan ink composition includes a cyan pigment and a styrene acrylic polymer dispersant, and
the magenta ink composition includes a magenta pigment and a styrene acrylic polymer dispersant.

# FIGURE

| | Europäisches Patentamt European Patent Office Office européen des brevets | **EUROPEAN SEARCH REPORT** | Application Number EP 15 18 2926 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 284 029 B1 (SANO TSUYOSHI [JP] ET AL) 4 September 2001 (2001-09-04) * column 1, lines 65-68 * * claims 1,7,9 * * examples 1-6 * | 1-3,6 | INV. C09D11/106 C09D11/322 |
| X | US 2007/263054 A1 (YATAKE MASAHIRO [JP] ET AL) 15 November 2007 (2007-11-15) * examples; * * claims * * example 5; tables I-1 * * tables XVI-1 - XVI-2 * | 1-6,8 | |
| X | US 2008/146727 A1 (YATAKE MASAHIRO [JP]) 19 June 2008 (2008-06-19) * example 11; tables 2,5 * | 1-6 | |
| X | EP 2 682 437 A1 (SANYO COLOR WORKS [JP]) 8 January 2014 (2014-01-08) * claims 1-3 * * tables 6-9, 11, 12, 14 * * paragraphs [0106], [0109], [0112], [0115] * | 1-4,6,8 | TECHNICAL FIELDS SEARCHED (IPC) C09D |
| X | WO 2013/122016 A1 (DAINICHISEIKA COLOR CHEM [JP]) 22 August 2013 (2013-08-22) * examples; claim 1 * -& EP 2 816 088 A1 (DAINICHISEIKA COLOR CHEM [JP]) 24 December 2014 (2014-12-24) * claims 1-5 * * examples * * page 5, paragraphs 21,22 * * paragraphs [0083], [0086], [0092], [0095], [0096] * | 1-8 | |

-/--

The present search report has been drawn up for all claims

| Place of search | Date of completion of the search | Examiner |
|---|---|---|
| Munich | 23 November 2015 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 15 18 2926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 036251 A (DAINICHISEIKA COLOR CHEM) 23 February 2012 (2012-02-23) * claims; examples * | 1-7 | |
| X | JP 2012 021120 A (DAINICHISEIKA COLOR CHEM) 2 February 2012 (2012-02-02) * claims; examples * | 1-8 | |
| X | JP 2008 231130 A (SEIKO EPSON CORP) 2 October 2008 (2008-10-02) * claims; examples * | 1-8 | |
| X | US 2013/338273 A1 (SHIMANAKA HIROYUKI [JP] ET AL) 19 December 2013 (2013-12-19) * examples 4-11 * | 1-6,8 | |

**TECHNICAL FIELDS
SEARCHED     (IPC)**

The present search report has been drawn up for all claims

| Place of search | Date of completion of the search | Examiner |
|---|---|---|
| Munich | 23 November 2015 | Haider, Ursula |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 2926

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2015

| Patent document cited in search report | | Publication date | Patent family member(s) | | | Publication date |
|---|---|---|---|---|---|---|
| US 6284029 | B1 | 04-09-2001 | DE | 69914014 | D1 | 12-02-2004 |
| | | | DE | 69914014 | T2 | 09-06-2004 |
| | | | EP | 0959111 | A1 | 24-11-1999 |
| | | | US | 6284029 | B1 | 04-09-2001 |
| US 2007263054 | A1 | 15-11-2007 | AT | 452947 | T | 15-01-2010 |
| | | | EP | 1783182 | A1 | 09-05-2007 |
| | | | EP | 2123722 | A1 | 25-11-2009 |
| | | | US | 2007263054 | A1 | 15-11-2007 |
| | | | WO | 2006043700 | A1 | 27-04-2006 |
| US 2008146727 | A1 | 19-06-2008 | CN | 101205431 | A | 25-06-2008 |
| | | | JP | 2008150408 | A | 03-07-2008 |
| | | | US | 2008146727 | A1 | 19-06-2008 |
| EP 2682437 | A1 | 08-01-2014 | CN | 103443145 | A | 11-12-2013 |
| | | | EP | 2682437 | A1 | 08-01-2014 |
| | | | KR | 20140015365 | A | 06-02-2014 |
| | | | US | 2013338302 | A1 | 19-12-2013 |
| | | | WO | 2012118078 | A1 | 07-09-2012 |
| WO 2013122016 | A1 | 22-08-2013 | AU | 2013219442 | A1 | 14-08-2014 |
| | | | CA | 2864384 | A1 | 22-08-2013 |
| | | | CN | 104114654 | A | 22-10-2014 |
| | | | EP | 2816088 | A1 | 24-12-2014 |
| | | | JP | 5782394 | B2 | 24-09-2015 |
| | | | JP | 2013166867 | A | 29-08-2013 |
| | | | KR | 20140126382 | A | 30-10-2014 |
| | | | TW | 201336878 | A | 16-09-2013 |
| | | | US | 2015011687 | A1 | 08-01-2015 |
| | | | WO | 2013122016 | A1 | 22-08-2013 |
| EP 2816088 | A1 | 24-12-2014 | AU | 2013219442 | A1 | 14-08-2014 |
| | | | CA | 2864384 | A1 | 22-08-2013 |
| | | | CN | 104114654 | A | 22-10-2014 |
| | | | EP | 2816088 | A1 | 24-12-2014 |
| | | | JP | 5782394 | B2 | 24-09-2015 |
| | | | JP | 2013166867 | A | 29-08-2013 |
| | | | KR | 20140126382 | A | 30-10-2014 |
| | | | TW | 201336878 | A | 16-09-2013 |
| | | | US | 2015011687 | A1 | 08-01-2015 |
| | | | WO | 2013122016 | A1 | 22-08-2013 |
| JP 2012036251 | A | 23-02-2012 | JP | 5636580 | B2 | 10-12-2014 |
| | | | JP | 2012036251 | A | 23-02-2012 |

EPO FORM P0459

For more details about this annex : see Official Journal of the European Patent Office, No. 12/82

24

## ANNEX TO THE EUROPEAN SEARCH REPORT
## ON EUROPEAN PATENT APPLICATION NO.

EP 15 18 2926

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2015

| Patent document cited in search report | | Publication date | Patent family member(s) | | Publication date |
|---|---|---|---|---|---|
| JP 2012021120 | A | 02-02-2012 | JP | 5746837 B2 | 08-07-2015 |
| | | | JP | 2012021120 A | 02-02-2012 |
| JP 2008231130 | A | 02-10-2008 | NONE | | |
| US 2013338273 | A1 | 19-12-2013 | CN | 103443218 A | 11-12-2013 |
| | | | EP | 2687561 A1 | 22-01-2014 |
| | | | JP | 5717134 B2 | 13-05-2015 |
| | | | JP | 2012193249 A | 11-10-2012 |
| | | | KR | 20130135344 A | 10-12-2013 |
| | | | TW | 201243008 A | 01-11-2012 |
| | | | US | 2013338273 A1 | 19-12-2013 |
| | | | WO | 2012124212 A1 | 20-09-2012 |

EPO FORM P0459

For more details about this annex : see Official Journal of the European Patent Office, No. 12/82

**EP 2 990 447 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012072359 A